# EUROPEAN PATENT APPLICATION

(11) **EP 2 937 430 A1**
(43) Date of publication of application: **28.10.2015**
(21) Application number: 13865430.6
(22) Date of filing: 19.12.2013
(51) Int. Cl.: C21C 5/52, C22B 1/14

(54) **METHOD FOR REUSING IRON-CONTAINING BY-PRODUCT AND APPARATUS THEREFOR**

(30) Priority: 21.12.2012 KR 20120151462
(71) Applicant: Posco, Gyeongsangbuk-do 790-300 (KR)
(72) Inventor: LEE, Baek, Gwangyang-si Jeollanam-do 545-711 (KR); CHOI, Soo-Ho, Gwangyang-si Jeollanam-do 545-711 (KR); SHIN, Geon, Pohang-si Kyungsangbook-do 790-360 (KR)
(74) Representative: Zech, Stefan Markus
(86) International application number: PCT/KR2013/011856
(87) International publication number: WO 2014/098491

(57) **Abstract**

The present invention relates to a method for reusing an iron-containing by-product and an apparatus therefor and, more specifically, to a method for reusing an iron-containing by-product, comprising the steps of forming a briquette by mixing an iron-containing by-product with 5-20 parts by weight of carbon per 100 parts by weight of the iron-containing by-product, pre-reducing the briquette at 800-1300°C, and charging the pre-reduced briquette into an electric furnace, and to an apparatus for reusing an iron-containing by-product, comprising a reducing furnace for pre-reducing, at 800-1300°C, a briquette formed by mixing an iron-containing by-product with 5-20 parts by weight of carbon per 100 parts by weight of the iron-containing by-product, and an electric furnace into which the pre-reduced briquette is charged. The present invention can reduce the cost of treating industrial waste by recycling an iron-containing by-product, such as electric furnace dust which is an environmentally regulated substance discharged from an electric furnace, and can simultaneously contribute to reducing the cost of molten steel production by reusing the iron-containing by-product as a raw material for an electric furnace. In addition, the present invention can substitute for the function of a combustion facility for removing dioxin or carbon monoxide contained in the exhaust gas of an electric furnace, thereby inducing the effect of additional cost reduction.

## Description

### [Technical Field]

The present disclosure relates to a method for reusing an iron-containing by-product and an apparatus configured to use the method, and more particularly, to a method for reusing an iron-containing by-product by forming briquettes by mixing the iron-containing by-product with carbon, preliminarily reducing the briquettes, and reusing the preliminarily reduced briquettes in an electric furnace.

### [Background Art]

Techniques for reducing iron ore and using the reduced iron ore as a raw material in an electric furnace have long been used. Examples of iron ore reducing methods include a rotary kiln method and the Midrex method, and in such methods, iron ore is indirectly reduced by supplying a reducing gas to fine iron ore.

The Midrex method and the rotary kiln method are widely used for reducing iron ore in the related art. In these methods, iron ore is supplied to a reaction furnace, and a reducing gas is injected into the reaction furnace to indirectly reduce the iron ore, thereby producing direct reduced iron (DRI) for use as a raw material in an electric furnace.

However, if iron-containing by-products are reduced by methods such as the Midrex method or the rotary kiln method, it may take a relatively long time to obtain a target degree of reduction. In addition, a reducing furnace has to be located near an electric furnace so as to supply reduced iron (Fe) discharged from the reducing furnace at a temperature of 600°C or higher to the electric furnace without energy loss. However, it may be difficult to locate a reducing furnace near a side of an electric furnace according to the layout of a plant, and such a method may require a large amount of equipment as well as high costs, as compared to a method of only using an electric furnace.

Meanwhile, in a recent direct-reducing method, iron ore in which carbon is included is reduced through a reaction between the iron ore and the carbon under a reducing atmosphere at a certain temperature or higher.

Although dust generated from an electric furnace may contain about 40% T.Fe, the dust is commonly classified as industrial waste and discarded, because the dust also contains large amounts of environmental pollutants. In addition, although scale and sludge generated in ironworks as by-products also contain iron (Fe), most of the T.Fe of the scale and sludge exists in the form of iron oxides (FeO and Fe203). Therefore, if the scale and sludge were to be directly supplied to an electric furnace in such a state, the scale and sludge would not be reduced into iron (Fe). The term "T.Fe" refers to total Fe. For example, when the total Fe (T.Fe) of a given material is said to be 40%, it means that the Fe content of the given material is 40 parts by weight, based on 100 parts by weight of the given material.

In addition, foreign substances containing halogens such as plastics or vinyl may be included in steel scraps in small amounts and cause the formation of dioxins. Dioxins generated in this manner may be decomposed if heated to a temperature of 900°C or higher but may be reproduced at temperatures from about 250°C to about 650°C. Therefore, when gas is discharged from an electric furnace, the gas is heated to a temperature of 900°C or higher, and when the temperature of the gas is within the range of about 250°C to about 650°C, the gas is rapidly cooled with water so as to shorten the period of time for which the temperature of the gas is within this range and thus to minimize or prevent the formation of dioxins. However, this process requires additional equipment.

Therefore, if iron-containing by-products, such as dust generated as industrial waste from an electric furnace and scale and sludge generated from equipment other than an electric furnace such as continuous casting equipment or hot rolling equipment, are reused as raw materials in an electric furnace, the environment may be protected, and equipment investment costs may be reduced. Therefore, this technique will be usefully used in the art to which the present disclosure pertains.

### [Disclosure]

### [Technical Problem]

An aspect of the present disclosure may provide a method for reusing an iron-containing by-product.

An aspect of the present disclosure may also provide an apparatus for reusing an iron-containing by-product.

### [Technical Solution]

According to an aspect of the present disclosure, a method for reusing an iron-containing by-product may include: forming briquettes by mixing an iron-containing by-product with 5 parts by weight to 20 parts by weight of carbon, based on 100 parts by weight of the iron-containing by-product; preliminarily reducing the briquettes within a temperature range of 800°C to 1300°C; and supplying the preliminarily reduced briquettes to an electric furnace.

The iron-containing by-product may include at least one selected from the group consisting of dust, scale, and sludge.

The iron-containing by-product may include dust in an amount of 40 wt% to 60 wt%, scale in an amount of 30 wt% to 50 wt%, and sludge in an amount of 5 wt% to 10 wt%.

The briquettes may have an average diameter of 10 mm to 50 mm and an apparent density of 3000 kfg/cm³ to 6000 kgf/cm³, and a carbon material having a compressive strength of 20 kfg/cm³ to 100 kgf/cm³ may be included in the briquettes.

In the preliminarily reducing of the briquettes, the temperature range may be maintained by sensible heat of exhaust gas of the electric furnace and combustion heat provided by a burner.

The method may further include combusting exhaust gas of the electric furnace by supplying the exhaust gas to be combusted during the preliminarily heating of the briquettes.

A fluid used to transfer the briquettes may be an inert gas.

The inert gas may be selected from the group consisting of nitrogen gas and argon gas.

The preliminarily reduced briquettes may have a degree of reduction within a range of 10% to 80%.

The method may further include supplying carbon powder to the electric furnace to cause a direct reduction reaction.

According to another aspect of the present disclosure, an apparatus for reusing an iron-containing by-product may include: a reducing furnace in which briquettes formed by mixing an iron-containing by-product with 5 parts by weight to 50 parts by weight of carbon, based on 100 parts by weight of the iron-containing by-product is reduced within a temperature range of 800°C to 1300°C; and an electric furnace to which the preliminarily reduced briquettes are supplied.

The reducing furnace may include a burner.

The apparatus may further include a scrap preheating furnace.

### [Advantageous Effects]

According to the present disclosure, iron-containing by-products such as electric furnace dust, which is an environmental pollutant regulated by law, may be reused for reducing costs necessary for the disposal of industrial waste, and such iron-containing by-products may be used as raw materials in an electric furnace for reducing manufacturing costs of molten steel. In addition, the function of combustion equipment for removing dioxins or carbon monoxide contained in exhaust gas of an electric furnace may be replaced for additionally saving costs.

### [Description of Drawings]

FIG. 1 illustrates an exemplary apparatus including a reducing furnace and an electric furnace and configured to reuse an iron-containing by-product according to the present disclosure.
FIG. 2 illustrates another exemplary apparatus including a reducing furnace and a preheating furnace and configured to reuse an iron-containing by-product according to the present disclosure.

### [Best Mode]

Embodiments of the present disclosure will now be described in detail with reference to the accompanying drawings. The disclosure may, however, be exemplified in many different forms and should not be construed as being limited to the specific embodiments set forth herein.

The present disclosure provides a method for reusing an iron-containing by-product. In detail, the method includes: forming briquettes by mixing an iron-containing by-product with 5 parts by weight to 20 parts by weight of carbon, based on 100 parts by weight of the iron-containing by-product; preliminarily reducing the briquettes at a temperature of 800°C to 1300°C; and supplying the preliminarily reduced briquettes to an electric furnace.

In the present disclosure, the iron-containing by-product includes at least one selected from the group consisting of dust generated as industrial waste from an electric furnace, and scale and sludge generated from continuous casting or hot-rolling equipment. The iron-containing by-product exists in a form including FeO, Fe₂O₃, and Fe₃O₄ which are formed by combination of iron (Fe) and O₂.

In more detail, the iron-containing by-product may include dust in an amount of 0 wt% to 100 wt%, scale in an amount of 0 wt% to 100 wt%, and sludge in an amount of 0 wt% to 100 wt%. Preferably, the iron-containing by-product may include dust in an amount of 40 wt% to 60 wt%, scale in an amount of 30 wt% to 50 wt%, and sludge in an amount of 5 wt% to 10 wt%.

In the related art, although such dust contains about 40% T.Fe, the dust is classified as industrial waste and discarded because the dust also contains large amounts of environmental pollutants. In addition, since most T.Fe contained in scale and sludge exists in the form of iron oxides (FeO and Fe₂O₃), if the scale and sludge are directly supplied to an electric furnace, the scale and sludge are not reduced into iron (Fe). Therefore, according to the present disclosure, dust, scale, and sludge are preliminarily reduced and then used as raw materials in an electric furnace.

Preferably, the amount of carbon mixed with the iron-containing by-product may be 5 parts by weight to 20 parts by weight and more preferably 8 parts by weight to 15 parts by weight, based on 100 parts by weight of the iron-containing by-product. If the amount of carbon is less than 5 parts by weight, the amount of carbon reacting with iron oxides may be insufficient, and thus the iron oxides may not be sufficiently reduced, and if the amount of carbon is greater than 20 parts by weight, some of the carbon may remain after the carbon functions as a reducing agent, and thus more time and electricity may be necessary for decarbonization in the electric furnace.

The carbon may be carbon powder, and the average particle diameter of the carbon powder may preferably be 5 mm or less. If the average particle diameter of the carbon powder is greater than 5 mm, when the briquettes are formed by mixing the carbon powder and the iron-containing by-product, the carbon powder may not be easily combined with the iron-containing by-product.

Preferably, the briquettes may have an average diameter of 10 mm to 50 mm and an apparent density of 3000 kgf/cm³ to 6000 kgf/cm³, and a carbon material having a degree of compressive strength within the range of 20 kgf/cm³ to 100 kgf/cm³ may be included in the briquettes. If the compressive strength of the carbon material is lower than 20 kgf/cm³, the briquettes may be broken and wasted while being handled and transferred, and if the compressive strength of the carbon material is greater than 100 kgf/cm³, equipment costs may be unnecessarily increased.

If the average diameter of the briquettes including the carbon material is less than 10 mm, the briquettes may be fused to equipment or blown by exhaust gas. On the contrary, if the average diameter of the briquettes is greater than 50 mm, heat may not be uniformly transferred to the insides of the briquettes, and thus the briquettes may not be uniformly reduced.

The briquettes may be formed by supplying the iron-containing by-product and the carbon powder to a device such as a mold and molding the iron-containing by-product and the carbon powder. The briquettes may have similar shapes but may not have entirely the same shape, and thus the diameters of the briquettes may not be equal. Therefore, the size of the briquettes is denoted by an average diameter.

If the briquettes have an apparent density within the range of 3000 kgf/cm³ to 6000 kgf/cm³ as described above, when the briquettes are inserted into the electric furnace, the briquettes may be disposed between molten iron (7000 kgf/cm³) and sludge (2500 kgf/cm³). Therefore, in the present disclosure, it may be preferable that the briquettes have an apparent density within the above-mentioned range.

After the iron-containing by-product is formed into the briquettes including the carbon material, the degree of reduction of the iron-containing by-product is affected by the temperature of a reducing atmosphere rather than by the composition of a reducing gas injected from the outside because the iron-containing by-product contains carbon.

According to the present disclosure, the briquettes are preliminarily reduced within the temperature range of 800°C to 1300°C, and the process temperature of this preliminary reducing process may be maintained by sensible heat of exhaust gas of the electric furnace and combustion heat provided by a burner.

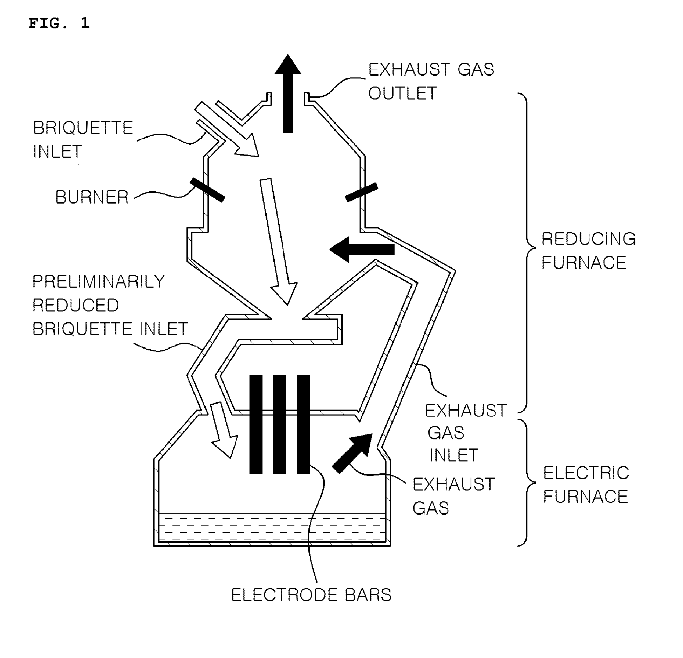

FIG. 1 illustrates an exemplary apparatus configured to use the method for reusing an iron-containing by-product according to the present disclosure. Referring to FIG. 1, a reducing furnace in which reduction occurs may include burners, and exhaust gas of an electric furnace may be supplied to the reducing furnace for using the sensible heat of the exhaust gas in the reducing furnace.

As described above, if exhaust gas of the electric furnace is supplied to the reducing furnace and combusted in a preliminary reducing process of the reducing furnace, a combustion tower for processing exhaust gas discharged from the electric furnace may be replaced with the reducing furnace.

A fluid for transferring the briquettes may be an inert gas not causing re-oxidation of reduced iron (Fe). In detail, the inert gas may be selected from the group consisting of nitrogen gas and argon gas.

After the preliminary reducing process, the degree of reduction of the briquettes may preferably be within the range of 10% to 80%. This reduction range may be achieved by adjusting the process temperature of the preliminary reducing process to be within the range of 800°C to 1300°C, and a reducing reaction time to be within the range of 10 minutes to 60 minutes. After the preliminary reducing process, the iron-containing by-product may include T.Fe (total Fe) in an amount of 50% to 80%, metal Fe in an amount of 0% to 50%, and an iron oxide (FeO) in an amount of 20% to 60%.

The term "T.Fe (total Fe)" refers to all iron (Fe) included in a given material in the form of Fe, FeO, Fe₂O₃, Fe₃O₄, etc., and the term "metal Fe" refers to iron (Fe) included in a given material in the form of Fe atoms.

In addition, a direct-reducing process may be further performed by supplying carbon powder to the electric furnace so as to reduce non-reduced substances contained in the electric furnace into metal Fe.

In this case, the amount of carbon powder supplied to the electric furnace may preferably be 50 wt% to 150 wt% of the amount of oxygen included in reduced iron (Fe), and the average particle diameter of the carbon powder may preferably be 5 mm or less.

If the amount of carbon powder is less than 50 wt% of the amount of oxygen included in reduced iron (Fe), the efficiency of reduction may be lowered because carbon necessary for the reduction reaction of the reduced iron may be insufficient. On the contrary, if the amount of carbon powder is greater than 150 wt% of the amount of oxygen included in reduced iron (Fe), carbon may float in the electric furnace, making it difficult to perform decarbonization and increasing a steel making time.

In addition, if the average particle diameter of the carbon powder is greater than 5 mm, a carbon reaction surface area of the carbon powder may be increased, and thus the rate of reaction may be decreased.

As described above, the present disclosure provides an apparatus configured to use the method for reusing an iron-containing by-product. In detail, the apparatus includes: a reducing furnace in which briquettes formed by mixing an iron-containing by-product with 5 parts by weight to 20 parts by weight of carbon, based on 100 parts by weight of the iron-containing by-product is preliminarily reduced within the temperature range of 800°C to 1300°C; and an electric furnace to which the briquettes preliminarily reduced in the reducing furnace is supplied.

According to the present disclosure, the reducing furnace may further include a burner, and the temperature range of 800°C to 1300°C for reducing the briquettes may be maintained by the sensible heat of exhaust gas of the electric furnace and combustion heat provided by the burner.

In the apparatus of the present disclosure, the reducing furnace may have a shell type design to which membrane stress may be structurally applied. The outside of the reducing furnace may be enclosed with an iron cover, and the inside wall of the reducing furnace may be formed of a refractory material resistant to temperatures of 800°C to 1300°C. In addition, the reducing furnace may include a water-cooling device.

The burner may be disposed in a wall of the reducing furnace as an additional heat source for maintaining a reducing temperature. In this case, the reducing furnace may be configured such that non-combusted carbon monoxide included in exhaust gas discharged from the electric furnace may be completely combusted, and the inside profile of the reducing furnace may be designed so as not to hinder the transfer of raw materials.

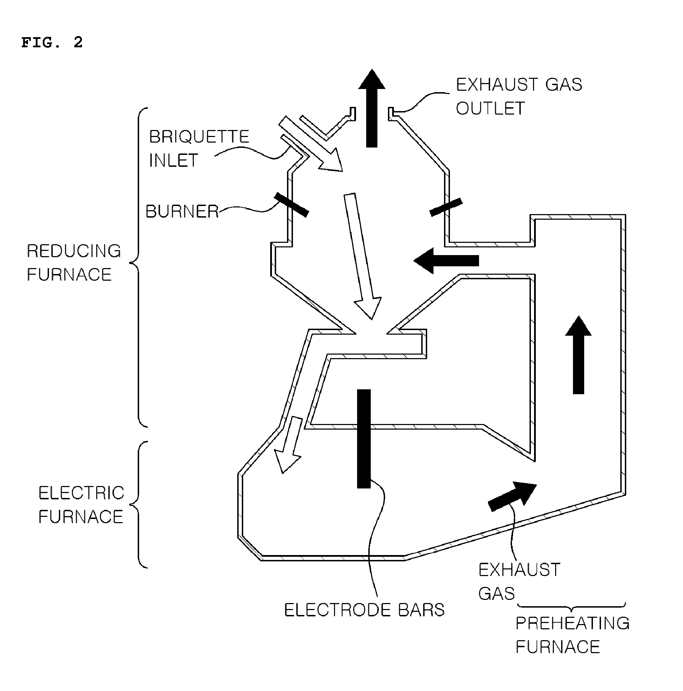

The apparatus of the present disclosure may further include a scrap preheating furnace as shown in FIG. 2. When scrap is supplied to the electric furnace as a raw material, the temperature of the scrap may be substantially the same as the temperature of the atmosphere. At this time, if the scrap is preheated before being supplied to the electric furnace, the electricity consumption of the electric furnace may be reduced by an amount equal to the amount of heat used to preheat the scrap. Thus, the preheating furnace may save electricity. The preheating furnace may be located on a side of the electric furnace, and scrap may be supplied to the preheating furnace through an upper portion of the preheating furnace and transferred from the preheating furnace to the electric furnace by a scrap supply device known as a pusher. At this time, exhaust gas of the electric furnace may be supplied to the preheating furnace to preheat the scrap through heat exchange between the relatively hot exhaust gas and the relatively cold scrap.

Since the reducing furnace consumes a relatively large amount of electricity, if scrap is preheated in the preheating furnace, the consumption of electricity may be reduced, and overall energy consumption may be efficiently controlled.

While exemplary embodiments have been shown and described above, it will be apparent to those skilled in the art that modifications and variations could be made without departing from the scope of the present invention as defined by the appended claims.

## Claims

1. A method for reusing an iron-containing by-product, the method comprising:
forming briquettes by mixing an iron-containing by-product with 5 parts by weight to 20 parts by weight of carbon, based on 100 parts by weight of the iron-containing by-product;
preliminarily reducing the briquettes within a temperature range of 800°C to 1300°C; and
supplying the preliminarily reduced briquettes to an electric furnace.

2. The method of claim 1, wherein the iron-containing by-product comprises at least one selected from the group consisting of dust, scale, and sludge.

3. The method of claim 2, wherein the iron-containing by-product comprises dust in an amount of 40 wt% to 60 wt%, scale in an amount of 30 wt% to 50 wt%, and sludge in an amount of 5 wt% to 10 wt%.

4. The method of claim 1, wherein the briquettes have an average diameter of 10 mm to 50 mm and an apparent density of 3000 kfg/cm³ to 6000 kgf/cm³, and a carbon material having a compressive strength of 20 kfg/cm³ to 100 kgf/cm³ is included in the briquettes.

5. The method of claim 1, wherein in the preliminarily reducing of the briquettes, the temperature range is maintained by sensible heat of exhaust gas of the electric furnace and combustion heat provided by a burner.

6. The method of claim 1, further comprising combusting exhaust gas of the electric furnace by supplying the exhaust gas to be combusted during the preliminarily heating of the briquettes.

7. The method of claim 1, wherein a fluid used to transfer the briquettes is an inert gas.

8. The method of claim 7, wherein the inert gas is selected from the group consisting of nitrogen gas and argon gas.

9. The method of claim 1, wherein the preliminarily reduced briquettes have a degree of reduction within a range of 10% to 80%.

10. The method of claim 1, further comprising supplying carbon powder to the electric furnace to cause a direct reduction reaction.

11. An apparatus for reusing an iron-containing by-product, the apparatus comprising:
a reducing furnace in which briquettes formed by mixing an iron-containing by-product with 5 parts by weight to 50 parts by weight of carbon, based on 100 parts by weight of the iron-containing by-product is reduced within a temperature range of 800°C to 1300°C; and
an electric furnace to which the preliminarily reduced briquettes are supplied.

12. The apparatus of claim 11, wherein the reducing furnace comprises a burner.

13. The apparatus of claim 11, further comprising a scrap preheating furnace.
